# EUROPÄISCHE PATENTSCHRIFT

(11) **EP 0 343 701 B1**
(45) Veröffentlichungstag und Bekanntmachung des Hinweises auf die Patenterteilung: **28.07.1993**
(21) Anmeldenummer: 89201127.1
(22) Anmeldetag: 02.05.1989
(51) Int. Cl.: B32B 15/01, G07F 1/06, A44C 21/00

(54) **Schichtverbundwerkstoff zur Herstellung von Münzen**
Composite layered material for the manufacture of coins
Matériau multicouche pour la fabrication de pièces de monnaie

(30) Priorität: 25.05.1988 DE 3817657
(43) Veröffentlichungstag der Anmeldung: 29.11.1989
(73) Patentinhaber: Krupp VDM GmbH, 58791 Werdohl (DE)
(72) Erfinder: Heubner, Ulrich, Dr., D-5980 Werdohl (DE); Rinke, Horst, D-5880 Lüdenscheid (DE); Walter, Hans Michael, D-5980 Werdohl (DE); von Loh, Gerhard, D-5990 Altena (DE)
(74) Vertreter: Cohausz & Florack Patentanwälte

(56) Entgegenhaltungen:
- EP-A- 0 086 507
- DE-A- 1 574 275
- DE-A- 2 644 018
- DE-A- 3 207 405
- DE-B- 1 558 703
- DE-B- 1 758 594
- DE-B- 1 774 498
- US-A- 3 697 237

## Beschreibung

Die Erfindung bezieht sich auf eine Münze aus einem Schichtverbundwerkstoff mit einer eisenhaltigen Kernschicht und beidseitig plattierten Deckschichten aus austenitischem Chrom-Nickel-Stahl.

Bei den in früheren Zeiten gebräuchlichen Kurant-Münzen entsprach der Metallwert (Gold, Silber) im wesentlichen dem Nennwert der Münzen, so daß ihr effektiver Wert stets den Metallpreisänderungen folgte. Der mit der Industrialisierung und Intensivierung von Handel und Verkehr zunehmende Bedarf an Münzen, wurde ab Mitte des 19. Jahrhunderts mehr und mehr durch Scheidemünzen gedeckt, bei denen der Metallwert im allgemeinen nur einen Bruchteil des Nenn- oder Prägewertes ausmachte. Inzwischen sind aber auch Scheidemünzen aus Gold oder Silber nicht mehr gebräuchlich, weil der Metallwert so stark angestiegen ist, das der Prägewert der Münzen erreicht oder überschritten wurde, zumindest aber für eine wirtschaftliche Münzherstellung zu hoch ist.

Es hat daher schon verschiedene Bestrebungen gegeben, die klassischen Münzmetalle Gold und Silber durch andere Werkstoffe zu ersetzen. Vielfach ist dabei versucht worden, die ursprüngliche Münzfarbe beizubehalten, wobei Nickel anstelle von Silber und bestimmte Kupferlegierungen anstelle von Gold getreten sind.

Inzwischen werden aber auch Werkstoffe aus Nickel oder überwiegend Nickel enthaltenden Legierungen, die in großem Umfang zur Substitution von Silber eingesetzt worden sind, als zu teuer für die Münzherstellung angesehen und sollen durch preiswertere Werkstoffe ersetzt werden. Dabei wird selbstverständlich vorausgesetzt, daß die Ersatzwerkstoffe die gleichen Gebrauchseigenschaften wie Nickel aufweisen. Deswegen kommen beispielsweise Aluminium wegen zu geringer spezifischer Dichte und normale Eisenwerkstoffe mangels ausreichender Korrosionsbeständigkeit nicht in Betracht.

Die Auswahl eines geeigneten Substitutionswerkstoffs wird aber vor allem dadurch erschwert, daß die Münzen aus dem neuen Werkstoff zumindest eine gewisse Zeit parallel mit gleichwertigen Münzen aus Nickel bzw. Nickellegierungen benutzt werden müssen, weil eine Umstellung auf die neuen Münzen an einem bestimmten Stichtag technisch kaum durchführbar und wirtschaftlich nicht vertretbar ist. Schon aus diesem Grund müssen die neuen Münzen hinsichtlich aller in automatischen Münzprüfern relevanten Eigenschaften mit den alten Münzen übereinstimmen. Aber selbst wenn man sich für eine Umstellung zu einem bestimmten Stichtag entschließen sollte, muß diese Bedingung erfüllt sein, denn eine Umrüstung oder Substitution aller Münzautomaten im Hinblick auf geänderte Prüfeigenschaften der neuen Münzen wäre auf keinen Fall durchsetzbar.

Bei den heute nur noch wenig benutzten mechanischen Münzprüfgeräten werden außer den Abmessungen der Münze die Dichte und das Rücksprungverhalten beim Aufprall auf einen Abstoß geprüft. Diese verhältnismäßig einfachen Prüfungen sind im Laufe der Zeit durch die Prüfung der elektrischen und magnetischen Eigenschaften der Münzen ergänzt bzw. ersetzt worden, wobei die Bewegung der Münzen durch den Münzprüfer beeinflußt werden kann, um eine wirksame Unterscheidung von Falsifikaten zu ermöglichen.

Durch eingebaute Permanentmagneten können elektrisch leitende, aber nicht magnetisierbare Münzen durch Ausnutzung des Wirbelstrom-Bremseffekts verzögert werden, wobei es auf das Verhältnis von spezifischer Dichte und spezifischer elektrischer Leitfähigkeit des Münzwerkstoffs ankommt, für das ein sehr enger Akzeptanzbereich eingestellt werden kann.

Andererseits kann die Bewegung magnetisierbarer Münzen durch Magnete direkt beeinflußt werden, wobei sich eine Verzögerung, Beschleunigung oder seitliche Ablenkung meist in einer Freiflugstrecke der Münze auswirkt und dazu führt, daß nur solche Münzen in den Akzeptanzschacht gelangen, die aus dem "richtigen" Münzwerkstoff bestehen.

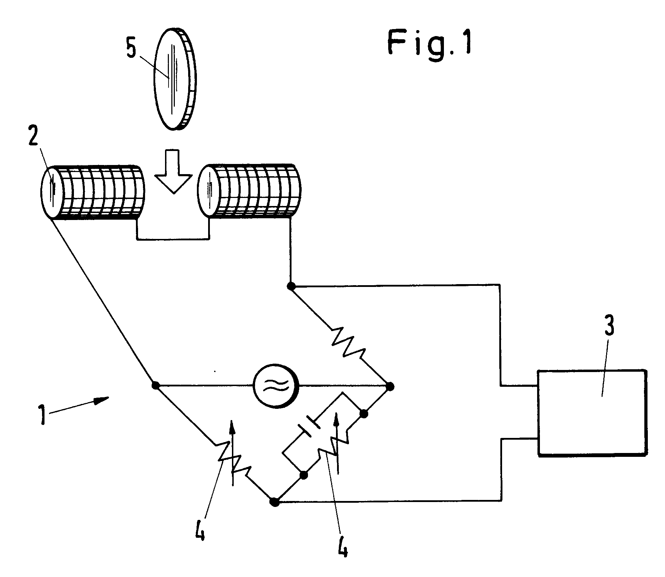

Neuerdings ist die Münzerprüfung durch sogenannte elektronische Münzprüfer weiter verbessert worden. In Figur 1 ist vereinfacht eine solche Münzprüfeinrichtung dargestellt. Sie besteht im wesentlichen aus einer Wechselstrommeßbrücke (1), in deren einem Zweig ein Meßspulenpaar (2) angeordnet ist, sowie aus einer Elektronik-Einrichtung (3), zur Verarbeitung und Auswertung der Meßergebnisse. Die Wechselstrombrücke (1) wird mittels Abgleichwiderständen (4) und einer Kalibriermünze so eingestellt, daß ihre Diagonalspannung den Wert Null einnimmt, wenn sich eine "richtige" Münze (5) zwischen den Meßspulen (2) befindet, d.h. eine Münze, die hinsichtlich Abmessungen und Werkstoffeigenschaften mit der Kalibriermünze übereinstimmt. Dieser Nullabgleich wird als Prüfsignal benutzt und für eine Akzeptanzentscheidung ausgewertet. Die elektromagnetischen Spulen können für verschiedene Frequenzen, vorzugsweise im Bereich von 0,1 bis 100 kHz eingestellt werden. Durch eine Mehrfachprüfung bei verschiedenen Frequenzen kann die Prüfsicherheit erheblich gesteigert werden. Im allgemeinen ist mindestens eine Zweifachprüfung erforderlich, um neben den Werkstoffeigenschaften auch den Einfluß der Münzabmessungen erfassen zu können.

Für die Substitution von Nickel durch einen anderen Werkstoff bedeutet das, daß der Substitutionswerkstoff bei den gebräuchlichen Prüffrequenzen mit dem Nickel im wesentlichen übereinstimmende Prüfergebnisse erbringen muß.

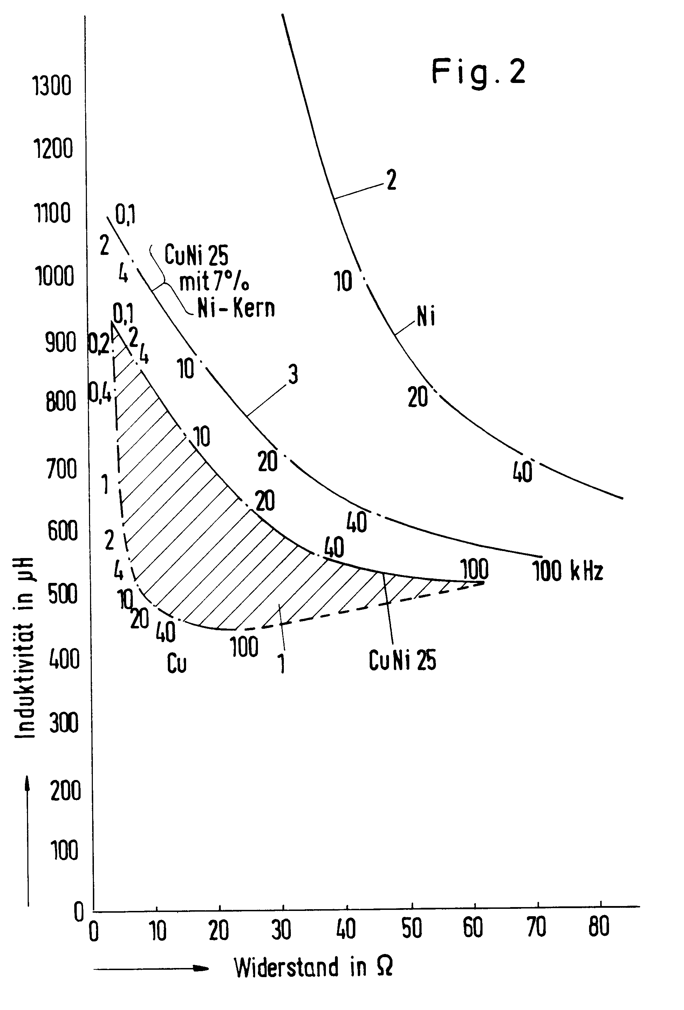

In Figur 2 sind die Ortskurven des komplexen Scheinwiderstandes für verschiedene Werkstoffe und verschiedenen Prüffrequenzen für gleichbleibende Münzabmessungen dargestellt; auf der Abzisse der Realteil in Ohm und auf der Ordinate der Imaginärteil in µH. Die Zahlen an den Kurven geben die Prüffrequenz in kHz an. Man erkennt sofort, daß die bisher üblichen unmagnetischen Münzwerkstoffe, d.h. Kupfer und Kupferlegierungen mit bis zu 25 % Nickel (schraffierter Bereich 1) zur Lösung der Substitutionsaufgabe ausscheiden, denn sie liegen mit ihren charakteristischen Prüfwerten bei allen Frequenzen weitab von der für Nickel geltenden Kurve 2. Auch der aus der DE-A 1558703 bekannte, schwach magnetisierbare Schichtverbundwerkstoff aus einem 7 % der Gesamtdicke einnehmenden Nickelkern mit zwei 46,5 % der Gesamtdicke betragenden Deckschichten aus einer Kupferlegierung mit 25 % Nickel, Kurve 3, ist nicht brauchbar, denn auch hierfür gibt es in dem gebräuchlichen Frequenzbereich keinen Punkt, in dem der komplexe Scheinwiderstand mit demjenigen von Nickel übereinstimmt oder auch nur in die Nähe kommt.

Die in der DE-A-15 58 703 außerdem zum Stand der Technik genannten Münzwerkstoffe mit einem magnetisierbaren Kern aus Eisen und Deckschichten aus nicht-magnetisierbaren Chrom-Nickel-Stählen werden wegen schwieriger Verarbeitbarkeit und schlechter Prägbarkeit als nachteilig bezeichnet.

Es besteht somit die Aufgabe, einen Münzwerkstoff vorzuschlagen, der hinsichtlich aller Gebrauchseigenschaften als Substitut für Nickel oder überwiegend Nickel enthaltende Münzlegierungen geeignet ist und der sich darüber hinaus auch hinsichtlich der Prüfeigenschaften nicht so weit von dem zu substituierenden Werkstoff unterscheidet, daß vorhandene Münzprüfer ausgetauscht oder umgerüstet werden müßten.

Zur Lösung dieser Aufgabe wird eine Münze aus einem gattungsgemäßen Schichtverbundwerkstoff vorgeschlagen, der eine Kernschicht aus einem ferritischen Chrom-Stahl aufweist. In weiterer Ausbildung der Erfindung ist vorgesehen, daß die Dicke jeder aufplattierten Schicht 2 bis 10 % der Gesamtdicke des Schichtverbundwerkstoffs beträgt. Vorzugsweise beträgt die Dicke jeder aufplattierten Schicht 5 % der Gesamtdicke des Schichtverbundwerkstoffs.

Eine weitere Lösung der gestellten Aufgabe besteht darin, daß der Schichtverbundwerkstoff eine Kernschicht aus einem austenitischen Chrom-Nickel-Stahl aufweist, die beidseitig mit einer Schicht aus einem ferritischen Chrom-Stahl plattiert ist. Die Dicke jeder aufplattierten Schicht beträgt 20 bis 40 %, vorzugsweise 30 % der Gesamtdicke des Schichtverbundwerkstoffs.

Als Chrom-Stahl wird zweckmäßigerweise der rostfreie ferritische Stahl X8Cr17 (Werkstoff-Nr. 1.4016) und als Chrom-Nickel-Stahl der rostfreie austenitische Stahl X5CrNi1911 (Werkstoff-Nr. 1.4303) verwendet.

Weitere Einzelheiten der Erfindung werden anhand der ermittelten Prüfergebnisse erläutert.

Münzrohlinge mit einer Dicke von 2 mm aus dem erstgenannten Substitutionswerkstoff wurden zwischen zwei Meßspulen gemäß Fig. 1 gebracht, und es wurde der Scheinwiderstand der Anordnung Spule/Münze bei 0,1 kHz und 100 kHz nach Realteil (Verlustwiderstand R in Ohm) und Imaginärteil (induktiver Widerstand L in Henry) gemessen. In gleicher Weise wurden Münzrohlinge aus Reinnickel, aus dem rostfreien ferritischen Stahl X8Cr17 (Werkstoff-Nr. 1.4016) und dem rostfreien austenitischen Stahl X5CrNi1911 (Werkstoff-Nr. 1.4303) untersucht. Die Ergebnissne sind in Tabelle 1 wiedergegeben.

Beim induktiven Widerstand L ergibt sich bei der Frequenz von 0,1 kHz eine sehr gute Übereinstimmung zwischen Nickel (erste Zeile) und dem erfindungsgemäßen Werkstoffverbund (4. Zeile). Die Differenz beträgt nur 1,2 %, was im Vergleich zu einer in den Prüfgeräten einzustellenden Akzeptanzbereiches von einigen % nicht sehr groß ist. Bei der Meßfrequenz von 100 kHz liegen Nickel und der erfindungsgemäße Werkstoffverbund weiter auseinander, wobei jedoch über eine Feinabstimmung der gewählten Schichtdicken noch eine bessere Annäherung möglich ist, wenn die Prüfung unbedingt bei 100 kHz und einem engen Akzeptanzbereich erfolgen soll und nicht bei 0,1 kHz, wo eine sehr gute Übereinstimmung erreicht ist. Man sieht, das die im erfindungsgemäßen Werkstoffverbund beteiligten Stähle (Zeilen 2 und 3) hinsichtlich ihres induktiven Widerstandes jeweils deutlich über bzw. unter den Werten für Nickel liegen, so daß es im Rahmen der vorgegebenen bzw. technisch realisierbaren Schichtdickenverhältnisse praktisch immer möglich ist, bei der vorgegebenen Prüffrequenzen eine hinreichende Übereinstimmung zwischen dem Verbundwerkstoff und Nickel herzustellen.

Ähnliches gilt für den Verlustwiderstand R, dessen Werte für alle vier Proben bei einer Meßfrequenz von 0,1 kHz relativ dicht beieinander liegen, so daß es möglich ist, einen entsprechenden Akzeptanzbereich einzustellen. Bei einer Meßfrequenz von 100 kHz liegen die im Verbundwerkstoff beteiligten Stähle wiederum deutlich über bzw. unter dem Wert für Nickel, so daß auch hier über eine Feinabstimmung der Schichtanteile eine Annäherung an den Nickelwert möglich ist.

In der letzten Spalte sind die Preisverhältnisse nach derzeitigem Stand angegeben. Danach beträgt der Preis für den ferritischen Stahl X8Cr17 (Zeile 2) nur rund 1/4 desjenigen von Nickel, der Preis für den rostfreien austenitischen Stahl X5CrNi1911 (Zeile 3) nur rund 1/3 und der Verbundwerkstoff (Zeile 4) nur rund die Hälfte, wobei im letztgenannten Fall bereits die höheren Verarbeitungskosten infolge der Plattierung berücksichtigt worden sind.

Zusammenfassend kann festgestellt werden, daß das eingangs geschilderte Substitutionsproblem mit dem erstgenannten Schichtverbundwerkstoff hinsichtlich aller Anforderungen gelöst werden kann.

Für Münzprüfsysteme, bei denen die elektrische Dämpfung des Prüflings zur Erkennung und Unterscheidung von Falsifikaten herangezogen wird, kann der zweitgenannte erfindungsgemäße Schichtverbundwerkstoff verwendet werden. Die bei einer Prüffrequenz von 50 kHz ermittelten Dämpfungswerte für die vier verschiedenen Münzwerkstoffe, sind in Tabelle 2 zusammengestellt. Überraschenderweise liegt die Dämpfung des Schichtverbundwerkstoffs gemäß Zeile 4 nicht zwischen den Werten für die Einzelwerkstoffe gemäß den Zeilen 2 und 3, sondern deutlich über dem höheren Wert für X8Cr17 (Zeile 2) und so nahe bei dem Wert für Nickel, daß bei einer Substitution des Nickels keine andere Akzeptanzbreite eingestellt werden muß. Auch hier läßt sich durch eine Feinabstimmung der Schichtdickenverhältnisse noch eine bessere Übereinstimmung mit dem Dämpfungswert für Nickel herbeiführen.

Mit den beiden erfindungsgemäßen Schichtverbundwerkstoffen aus den gleichen Ausgangsmaterialien, kann somit eine Nickel-Substitut bereitgestellt werden, bei dem hinsichtlich aller üblichen Gebrauchseigenschaften keine Abstriche hingenommen werden müssen und das hinsichtlich aller bei modernsten Münzprüfeinrichtungen relevanten Eigenschaften so ausgelegt werden kann, daß die an den Münzprüfer eingestellten Akzeptanzbereiche für Nickel nicht oder nur wenig geändert werden müssen.

**TABELLE 1**

| | | L in µH | | R in Ohm | | Preisververhältnis |
|---|---|---|---|---|---|---|
| | | 0,1 kHz | 100 kHz | 0,1 kHz | 100 kHz | |
| 1 | Nickel | 4.840 | 610 | 4,7 | 132 | 1 |
| 2 | X8Cr17 | 9.300 | 1.350 | 4,2 | 491 | 0,25 |
| 3 | X5CrNi1911 | 930 | 560 | 3,6 | 83 | 0,33 |
| 4 | 2 x 5% (3) auf (2) plattiert | 4.780 | 870 | 3,8 | 397 | 0,5 |

**TABELLE 2**

| | | Dämpfung in dB |
|---|---|---|
| 1 | Nickel | 65,3 |
| 2 | X8Cr17 | 58,4 |
| 3 | X5CrNi1911 | 19,1 |
| 4 | 2 x 30% (2) auf (3) plattiert | 66,9 |

## Patentansprüche

1. Münze aus einem Schichtverbundwerkstoff mit einer eisenhaltigen Kernschicht und beidseitig plattierten Deckschichten aus austenitischem Chrom-Nickel-Stahl,
**dadurch gekennzeichnet,** daß die Kernschicht aus einem ferritischen Chromstahl besteht.

2. Münze nach Anspruch 1,
**dadurch gekennzeichnet,** daß die Dicke jeder aufplattierten Schicht 2 bis 10 % der Gesamtdicke des Schichtverbundwerkstoffs beträgt.

3. Münze nach Anspruch 2,
**dadurch gekennzeichnet,** daß die Dicke jeder aufplattierten Schicht 5 % der Gesamtdicke des Schichtverbundwerkstoffs beträgt.

4. Münze aus einem Schichtverbundwerkstoff mit einer eisenhaltigen Kernschicht und beidseitig plattierten Deckschichten aus chromhaltigem Stahl,
**dadurch gekennzeichnet,** daß die Münze eine Kernschicht aus einem austenitischen Chrom-Nickel-Stahl aufweist, die beidseitig mit einer Schicht aus einem ferritischen Chrom-Stahl plattiert ist.

5. Münze nach Anspruch 4,
**dadurch gekennzeichnet,** daß die Dicke jeder aufplattierten Schicht 20 bis 40 % der Gesamtdicke des Schichtverbundwerkstoffs beträgt.

6. Münze nach Anspruch 5,
**dadurch gekennzeichnet,** daß die Dicke jeder aufplattierten Schicht 30 % der Gesamtdicke des Schichtverbundwerkstoffs beträgt.

7. Münze nach einem der Ansprüche 1 bis 6,
**dadurch gekennzeichnet,** daß als Chrom-Stahl der rostfreie ferritische Stahl X8Cr17 (Werkstoff-Nr. 1.4016) verwendet wird.

8. Münze nach einem der Ansprüche 1 bis 6,
**dadurch gekennzeichnet,** daß als Chrom-Nickel-Stahl der rostfreie austenitische Stahl X5CrNi1911 (Werkstoff-Nr. 1.4303) verwendet wird.

## Claims

1. A coin made from a composite layered material and having an iron-containing core layer and austenitic chromium-nickel steel plated cover layers on both sides, characterized in that the core layer consists of a ferritic chromium steel.

2. A coin according to claim 1, characterized in that the thickness of each plated-on layer amounts to 2 to 10% of the total thickness of the composite layered material.

3. A coin according to claim 2, characterized in that the thickness of each plated-on layer amounts to 5% of the total thickness of the composite layered material.

4. A coin made from a composite layered material and having an iron-containing core layer and plated cover layers of chromium-containing steel on both sides characterized in that the coin has a core layer of an austenitic chromium-nickel steel which is plated on both sides with a layer of a ferritic chromium steel.

5. A coin according to claim 4, characterized in that the thickness of each plated-on layer amounts to 20 to 40% of the total thickness of the composite layered material.

6. A coin according to claim 5, characterized in that the thickness of each plated-on layer amounts to 30% of the total thickness of the composite layered material.

7. A coin according to one of claims 1 to 6, characterized in that the chromium steel used is the rustproof ferritic steel X8Cr17 (Material No. 1.4016).

8. A coin according to one of claims 1 to 6, characterized in that the chromium-nickel steel used is the rustproof austenitic steel X5CrNi1911 (Material No. 1.4303).

## Revendications

1. Pièce de monnaie en un matériau composite laminaire avec une couche de noyau contenant du fer et des couches de couverture plaquées des deux côtés en acier austénitique au nickel-chrome,
caractérisée en ce que la couche de noyau est constituée par un acier au chrome ferritique.

2. Pièce de monnaie selon la revendication 1,
caractérisée en ce que l'épaisseur de chacune des couches plaquées est de 2 à 10 % de l'épaisseur totale du matériau composite laminaire.

3. Pièce de monnaie selon la revendication 2,
caractérisée en ce que l'épaisseur de chacune des couches plaquées est de 5 % de l'épaisseur totale du matériau composite laminaire.

4. Pièce de monnaie en un matériau composite laminaire avec une couche de noyau contenant du fer et des couches de couverture plaquées des deux côtés en acier contenant du chrome,
caractérisée en ce que la pièce de monnaie présente une couche de noyau en acier austénitique au nickel-chrome qui est plaquée des deux côtés par une couche d'un acier ferritique au chrome.

5. Pièce de monnaie selon la revendication 4,
caractérisée en ce que l'épaisseur de chacune des couches plaquées est de 20 à 40 % de l'épaisseur totale du matériau composite laminaire.

6. Pièce de monnaie selon la revendication 5,
caractérisée en ce que l'épaisseur de chacune des couches plaquées est de 30 % de l'épaisseur totale du matériau composite laminaire.

7. Pièce de monnaie selon l'une des revendications 1 à 6,
caractérisée en ce qu'on utilise comme acier au chrome l'acier ferritique inoxydable X8 Cr 17 (matière première No 1.4016).

8. Pièce de monnaie selon l'une des revendications 1 à 6,
caractérisée en ce qu'on utilise comme acier au nickel-chrome l'acier austénitique inoxydable X5 Cr Ni 1911 (matière première No 1.4303).
